(19) Europäisches Patentamt
European Patent Office
Office européen des brevets

(11) **EP 2 549 294 B1**

(12) **EUROPÄISCHE PATENTSCHRIFT**

(45) Veröffentlichungstag und Bekanntmachung des Hinweises auf die Patenterteilung:
**04.12.2013 Patentblatt 2013/49**

(51) Int Cl.:
*G01S 13/93* (2006.01)          *G01S 17/93* (2006.01)
*G01S 15/93* (2006.01)          *G06T 7/00* (2006.01)

(21) Anmeldenummer: **11005963.1**

(22) Anmeldetag: **20.07.2011**

(54) **Verfahren zur Erfassung und Bestätigung kritischer Fahrsituationen**

Method for detecting and confirming critical driving situations

Procédé pour déceler et confirmer des conditions de conduite critiques

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**23.01.2013 Patentblatt 2013/04**

(73) Patentinhaber: **Delphi Technologies, Inc.
Troy MI 48007 (US)**

(72) Erfinder:
• **Müller, Dennis
40699 Erkrath (DE)**
• **Nunn, Christian Markus
42117 Wuppertal (DE)**
• **Meuter, Mirko Nicolas
40699 Erkrath (DE)**
• **Görmer, Steffen
42281 Wuppertal (DE)**

(74) Vertreter: **Robert, Vincent
Delphi France SAS - IP Department
Bât. Le Raspail - ZAC Paris Nord 2
22 avenue des Nations
CS 65059 Villepinte
95972 Roissy CDG Cedex (FR)**

(56) Entgegenhaltungen:
DE-A1-102007 023 037          US-A- 6 163 252
US-A1- 2003 078 754          US-A1- 2006 031 015

• DOYLE R S ET AL: "Multi-sensor data fusion for helicopter guidance using neuro-fuzzy estimation algorithms", SYSTEMS, MAN AND CYBERNETICS, 1995. INTELLIGENT SYSTEMS FOR THE 21ST C ENTURY., IEEE INTERNATIONAL CONFERENCE ON VANCOUVER, BC, CANADA 22-25 OCT. 1995, NEW YORK, NY, USA, IEEE, US, Bd. 2, 22. Oktober 1995 (1995-10-22), Seiten 1392-1397, XP010194472, DOI: 10.1109/ICSMC.1995.537967 ISBN: 978-0-7803-2559-3

**Beschreibung**

Die vorliegende Erfindung betrifft ein Verfahren zur Erfassung und Bestätigung kritischer Fahrsituationen, bei dem ein insbesondere vor einem Fahrzeug befindliches Objekt mittels mehrerer unabhängiger, dem Fahrzeug zugeordneter Sensoreinheiten überwacht wird. Bei dem zu überwachenden Objekt kann es sich beispielsweise um ein vorangehendes Fahrzeug handeln.

Die Erfassung und Bestätigung kritischer Fahrsituationen wie beispielsweise einer drohenden Kollision mit einem vorangehenden Fahrzeug ist für Fahrerassistenzanwendungen von entscheidender Bedeutung. Die Entscheidungssicherheit, die mit einer einzigen Sensoreinheit, zum Beispiel einer Radareinheit, einer Kamera oder einem optischen Abtast- und Geschwindigkeitsmesssystem (LIDAR, Light detection and ranging) erreicht werden kann, ist durch verschiedene Faktoren begrenzt. Durch eine Kombination der von mehreren Sensoren stammenden einzelnen Entscheidungen zu einer Endentscheidung kann die Entscheidungssicherheit insgesamt erhöht werden, was eine verbesserte Reaktion der sich anschließenden Fahrerassistenzsysteme ermöglicht. Dabei ist beispielsweise eine Kollisionsminderung durch ein Bremssystem möglich, indem früher und stärker abgebremst wird, sodass Unfälle verhindert werden können, die mit nur einem einzigen Sensor nicht zu verhindern gewesen wären. Eine solche verbesserte Signalsicherheit beruht auf der Verwendung von beispielsweise zwei unabhängigen Quellen. Insbesondere bei kritischen Entscheidungen wie beispielsweise bei einer Entscheidung, ob gebremst werden soll oder nicht, führt bereits der Umstand, dass zwei unabhängige Sensoren zu derselben Entscheidung kommen, dazu, dass die Sicherheit der endgültigen Entscheidung erhöht wird. Zur Ableitung dieser Endentscheidung von mehreren jeweils von einer einzelnen Quelle stammenden Entscheidungen sind bereits mehrere Algorithmen wie zum Beispiel die Mehrheitswahl bekannt geworden, bei der jeder Sensor für eine Entscheidung votiert. Die Entscheidung, die die meisten Stimmen erhält, stellt dann die Gesamtentscheidung dar.

Darüber hinaus bietet die Verfügbarkeit mehrerer Sensorsignale jedoch auch die Möglichkeit, diese Signale durch verschiedene mathematische Methoden zu kombinieren, um ein kombiniertes Endsignal mit verbesserten Eigenschaften wie zum Beispiel erhöhter Genauigkeit zu liefern.

In der US 2006/031015 A1 ist ein Kollisionsvermeidungssystem für ein Kraftfahrzeug offenbart, das darauf beruht, ein Objekt in der Umgebung des Fahrzeugs zu beobachten und die Wahrscheinlichkeit, dass sich dieses Objekt gerade in einer Kollisionszone befindet, mit der Wahrscheinlichkeit, dass sich das Objekt gerade in einer sicheren Zone befindet, zu vergleichen.

Der Aufsatz "Multi-Sensor Data Fusion for Helicopter Guidance Using Neuro-Fuzzy Estimation Algorithms" von R. S. Doyle und C. J. Harris, Systems, Man and Cybernetics, 1995, Intelligent Systems for the 21st Century, IEEE International Conference on Vancouver, BC, Canada, 22-25 Oct. 1995, New York, NY, USA, IEEE, US, Bd. 2, 22. Oktober 1995, Seiten 1392-1397, offenbart ein Verfahren zum Lokalisieren von Hindernissen in der Umgebung eines Hubschraubers. Die Objekte werden bei diesem Verfahren mittels eines Kalman-Filters oder eines Bayes-Filters verfolgt.

In der US 2003/0078754 A1 ist ein Verfahren zur Sensorfusion offenbart, das auf der Anwendung eines neuronalen Netzes beruht.

Der Erfindung liegt die Aufgabe zugrunde, ein Verfahren der eingangs genannten Art zu schaffen, bei dem die Genauigkeit bei der Erfassung und Bestätigung einer jeweiligen kritischen Fahrsituation weiter erhöht ist.

Gemäß der Erfindung wird diese Aufgabe gelöst durch ein Verfahren zur Erfassung und Bestätigung kritischer Fahrsituationen, bei dem ein insbesondere vor einem Fahrzeug befindliches Objekt mittels mehrerer unabhängiger, dem Fahrzeug zugeordneter Sensoreinheiten überwacht wird, die von den Sensoreinheiten gelieferten Signale jeweils als Sensorsignal in Form einer diskretisierten Wahrscheinlichkeitsdichtefunktion der betreffenden physikalischen Messgröße über ein definiertes Intervall [0, MAX] bereitgestellt werden, die verschiedenen Sensorsignale zu einem einzigen, ebenfalls die Form einer Wahrscheinlichkeitsdichtefunktion der betreffenden Messgröße aufweisenden Endsignal kombiniert werden und mittels eines lernenden Klassifizierers anhand des kombinierten Endsignal eine endgültige Bewertung der aktuellen Fahrsituation vorgenommen wird.

Zur Reduzierung der Anzahl unnötiger und damit störender Warnaufrufe ist es erfindungsgemäß vorgesehen, mehrere Klassifizierer für unterschiedliche Geschwindigkeiten des mit den Sensoreinheiten versehenen Fahrzeuges zu trainieren. Bewegt sich das die Sensoreinheiten aufweisende Fahrzeug beispielsweise mit hoher Geschwindigkeit auf einer Autobahn, so ist eine frühzeitige Warnung, beispielsweise bei einer Zeitspanne von etwa 2,9 Sekunden bis zur Kollision, erforderlich, um dem Fahrer genügend Zeit für eine entsprechende Reaktion zu geben. Bewegt sich das mit den Sensoreinheiten versehene Fahrzeug dagegen mit geringer Geschwindigkeit beispielsweise in einer Stadt, so würde eine entsprechend empfindliche Warnschwelle zu einer Vielzahl von Warnaufrufen führen, die den Fahrer mehr ablenken als unterstützen. Um dies zu verhindern, können für unterschiedliche Geschwindigkeitsbereiche mehrere Klassifizierer trainiert und der geeignete Klassifizierer auf der Basis der aktuellen Geschwindigkeit ausgewählt werden. Man kann dieselben Trainingsdaten für jedes Training verwenden, wobei jedoch die Bezeichnung des Datensatzes geändert werden sollte, um Warnaufrufe oberhalb einer gegebenen Zeitschwelle zu unterbinden.

Aufgrund dieser Ausgestaltung wird die Entscheidungssicherheit bei der Erfassung und Bestätigung kritischer Fahrsituationen deutlich erhöht.

Die betreffende physikalische Messgröße umfasst vorzugsweise die Zeitspanne, bei deren Ablauf eine Kollision des Fahrzeuges mit dem Objekt, beispielsweise einem vorangehenden Fahrzeug, erwartet wird.

Gemäß einer zweckmäßigen Ausgestaltung des erfindungsgemäßen Verfahrens wird mittels wenigstens einer der Sensoreinheiten sowohl der Abstand des Objektes vom Fahrzeug als auch die Objektgeschwindigkeit erfasst.

Dabei kann die Zeitspanne bis zur Kollision durch den Quotienten zwischen dem Abstand des Objektes vom Fahrzeug und der Objektgeschwindigkeit bestimmt werden.

Bevorzugt werden dabei zur Bildung der Wahrscheinlichkeitsdichtefunktion der Zeitspanne bis zur Kollision bezüglich des Abstandes des Objektes vom Fahrzeug und der Objektgeschwindigkeit bestimmte statistische Eigenschaften angenommen.

Es ist jedoch beispielsweise auch denkbar, dass mittels wenigstens einer der Sensoreinheiten die Wahrscheinlichkeitsdichtefunktion der Zeitspanne bis zur Kollision direkt geschätzt wird.

In bestimmten Fällen kann es auch von Vorteil sein, wenn mittels wenigstens einer der Sensoreinheiten nur Modellparameter wie insbesondere der Abstand des Objektes vom Fahrzeug und die Objektgeschwindigkeit und die Standardabweichungen für den Abstand des Objektes vom Fahrzeug und die Objektgeschwindigkeit geliefert werden. In diesem Fall können die Modellparameter zweckmäßigerweise bei der Kombination der verschiedenen Sensorsignale zum Endsignal zur Rekonstruktion der jeweiligen Wahrscheinlichkeitsdichtefunktion verwendet werden.

Gemäß einer bevorzugten Ausgestaltung des erfindungsgemäßen Verfahrens wird bei der Kombination der verschiedenen Sensorsignale zum Endsignal die dem Endsignal zugeordnete Zufallsvariable durch das Maximum, das Minimum, den arithmetischen Mittelwert, den Massenmittelwert oder den Median der den Sensorsignalen zugeordneten, die jeweiligen Objektbeobachtungen beschreibenden Zufallsvariablen gebildet.

Als lernender Klassifizierer wird beispielsweise ein künstliches Neuronales Netzwerk oder eine Support Vector Machine verwendet werden.

Von Vorteil ist auch, wenn insbesondere für unterschiedliche Geschwindigkeiten des mit den Sensoreinheiten versehenen Fahrzeuges mehrere Klassifizierer trainiert werden.

Gemäß dem erfindungsgemäßen Verfahren werden also mehrere Sensoreinheiten eingesetzt. Dabei können die Sensoreinheiten beispielsweise jeweils ein Radarsystem, eine Kamera oder ein optisches Abstands- und Geschwindigkeitssystem (Lidar-System, LIGHT detection and ranging) umfassen. Die Sensoreinheiten können beispielsweise jeweils einen Schätzwert für eine Zeitspanne bis zur Kollision mit einem überwachten Objekt liefern. Sie können ihren Schätzwert für die Zeitspanne bis zur Kollision jeweils in Form einer diskretisierten Wahrscheinlichkeitsdichtefunktion der Zeitspanne über ein Intervall [0, MAX] liefern, wobei "MAX" als für die verwendeten Sensoreinheiten geeigneter Wert gewählt wird. Auf diese Art und Weise wird eine möglichst allgemeine Schnittstelle zu sämtlichen Sensoreinheiten geschaffen. Vorteilhafterweise wird daher eine solche Schnittstelle verwendet, da sämtliche Sensoreinheiten jeweils ihre Einschätzung des aktuellen Zustands, insbesondere der Zeitspanne bis zur Kollision, und die entsprechende Unsicherheit bezüglich dieser Einschätzung unter Verwendung dieser Schnittstelle liefern können.

So ist es beispielsweise denkbar, dass eine Sensoreinheit sowohl den Abstand des Objektes vom Fahrzeug als auch die Objektgeschwindigkeit mittels ihrer Messeinrichtung überwacht. Der Quotient der beiden Signale liefert die Zeitspanne bis zur Kollision, während die Wahrscheinlichkeitsdichtefunktion dieses Schätzwertes durch die Annahme einiger statistischer Eigenschaften bezüglich des Abstandes des Objektes vom Fahrzeug und der Objektgeschwindigkeit abgeleitet werden kann. Für eine andere Sensoreinheit mag es jedoch zweckmäßiger sein, die Wahrscheinlichkeitsdichtefunktion direkt zu schätzen. Eine solche Sensoreinheit kann dann eine multimodale Verteilung oder sogar eine insgesamt flache Verteilung im Fall völlig fehlender Kenntnisse liefern.

Ungeachtet der Art der jeweiligen Sensoreinheit und der intrinsischen Messeinheit kann jede Sensoreinheit der genannten Schnittstelle entsprechen, wobei diese Schnittstelle in der Lage ist, die gesamte erforderliche Information über das überwachte Objekt zu liefern oder zu übertragen.

Erforderlichenfalls können weitere Daten übertragen werden. Es ist auch möglich, nur einige Modellparameter wie zum Beispiel den Abstand des Objektes vom Fahrzeug, die Objektgeschwindigkeit und betreffende Standardabweichungen für den Abstand und die Objektgeschwindigkeit zu liefern, die dann bei der Signalkombination bzw. in einem entsprechenden Datenkombinationsmodul zur Rekonstruktion der Wahrscheinlichkeitsdichtefunktion herangezogen werden können, falls beispielsweise die Sensorbandbreite einen Engpass mit sich bringt.

Nach einer Kombination der zur Verfügung gestellten Informationen können ausgehend vom Endsignal statistische Merkmale berechnet und ein lernender Klassifizierer verwendet werden, um die endgültige Entscheidung über die aktuelle Zuverlässigkeit der aktuellen Situation zu treffen. Es können mehrere Klassifizierer für unterschiedliche Fahrsituationen wie beispielsweise für unterschiedliche Geschwindigkeiten des mit den Sensoreinheiten versehenen Fahrzeuges trainiert werden, um die Gesamtleistung des Systems zu verbessern und unnötige und damit störende Alarme zu unterbinden.

Je nach Art der Kombination der verschiedenen Sensorsignale zum Endsignal, beispielsweise durch das Maximum, das Minimum, den arithmetischen Mittelwert, den Massenmittelwert oder den Median der den Sensorsignalen zugeordneten, die jeweiligen Objektbeobachtungen beschreibenden Zufallsvariablen ergibt sich ein unterschiedliches Verhalten des sich daran anschließenden Klassifizierers und damit des darauffolgenden Fahrerassistenzsystems.

Nachdem die Wahrscheinlichkeitsdichtefunktion des Endsignals für ein bestimmtes Objekt zur Verfügung steht, kann ein trainierter Klassifizierer, beispielsweise ein künstliches Neuronales Netzwerk oder eine Support Vector Machine, verwendet werden, um das Endsignal zu analysieren und eine endgültige Entscheidung zu treffen. Als Input für den Klassifizierer können verschiedene Merkmale aus dem Endsignal berechnet werden, zum Beispiel der Mittelwert, die Standardabweichung, der Median, der Median der absoluten Abweichungen, verschiedene Quartile, verschiedene zentrale Momente, die sich ergebende Gesamtmasse und der Chi-Quadrat-Test-Wert für einen Hypothesentest, dass das Endsignal gleichmäßig über das gegebene Intervall verteilt ist. Jedes Merkmal kann spezifische Information enthalten, und der Klassifizierer kann auf ein gewünschtes Verhalten und eine gewünschte Warnzeitschwelle hin trainiert werden, indem die Proben in dem Trainingssatz sorgfältig ausgewählt werden.

Gegenstand der Erfindung ist zudem ein Computerprogramm mit Programmcodemitteln, um das vorstehend beschriebene Verfahren durchzuführen, wenn das Programm auf einem Computer oder einer entsprechenden Recheneinheit ausgeführt wird.

Gegenstand der Erfindung ist auch ein Computerprogrammprodukt mit Programmcodemitteln, die auf einem computerlesbaren Datenträger gespeichert sind, um das vorstehend beschriebene Verfahren durchzuführen, wenn das Computerprogramm auf einem Computer oder einer entsprechenden Recheneinheit ausgeführt wird.

Unter einem Computer wird hierbei eine beliebige Datenverarbeitungseinrichtung verstanden, mit der das Verfahren ausgeführt werden kann. Dabei kann eine solche Datenverarbeitungseinrichtung insbesondere digitale Signalprozessoren und/oder Mikroprozessoren umfassen, mit denen das Verfahren ganz oder in Teilen ausgeführt wird.

Schließlich ist Gegenstand der Erfindung auch eine Vorrichtung zur Erfassung und Bestätigung kritischer Fahrsituationen, bei der ein insbesondere vor einem Fahrzeug befindliches Objekt mittels mehrerer unabhängiger, dem Fahrzeug zugeordneter Sensoreinheiten überwacht wird, mit einer Datenverarbeitungseinrichtung, die zur Durchführung des vorstehend beschriebenen Verfahrens ausgebildet ist.

Die Erfindung wird im Folgenden anhand von Ausführungsbeispielen unter Bezugnahme auf die Zeichnung näher erläutert; in dieser zeigen:

Fig. 1     eine schematische Darstellung des Grundprinzips einer beispielhaften Ausgestaltung des erfindungsgemäßen Verfahrens,

Fig. 2     die Wahrscheinlichkeitsdichtefunktionen von drei Sensorsignalen sowie eines kombinierten Endsignals, wobei die dem Endsignal zugeordnete Zufallsvariable dem Maximum der den drei Sensorsignalen zugeordneten, die jeweiligen Objektbeobachtungen beschreibenden Zufallsvariablen entspricht, und

Fig. 3     die Wahrscheinlichkeitsdichtefunktionen von drei Sensorsignalen sowie eines kombinierten Endsignals, wobei die dem Endsignal zugeordnete Zufallsvariable dem Minimum der den drei Sensorsignalen zugeordneten, die jeweiligen Objektbeobachtungen beschreibenden Zufallsvariablen entspricht.

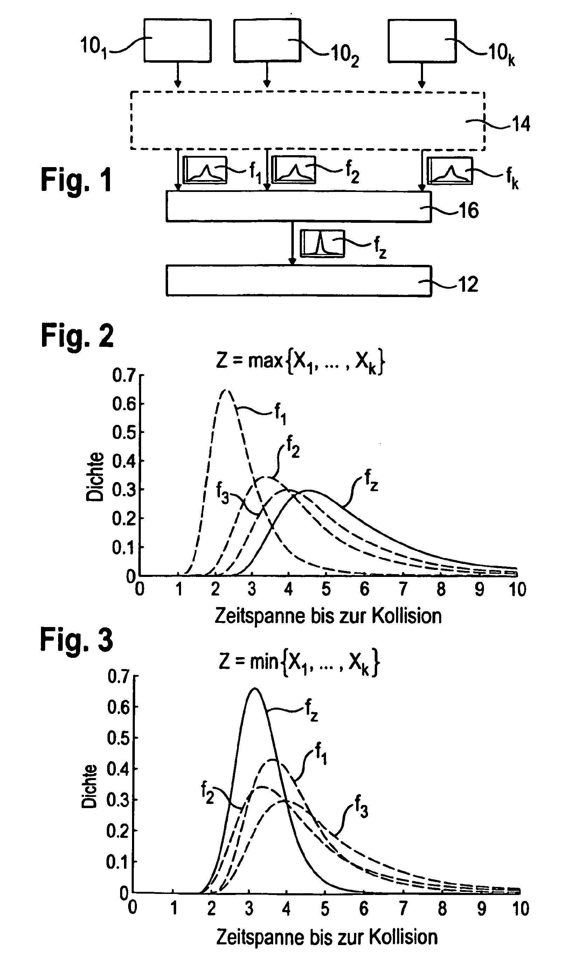

Fig. 1 zeigt in schematischer Darstellung das Grundprinzip einer beispielhaften Ausgestaltung des erfindungsgemäßen Verfahrens zur Erfassung und Bestätigung kritischer Fahrsituationen, bei dem ein insbesondere vor einem Fahrzeug befindliches Objekt mittels mehrerer unabhängiger, dem Fahrzeug zugeordneter Senoreinheiten $10_1$ - $10_k$ überwacht wird.

Die von den Sensoreinheiten $10_1$ - $10_k$ gelieferten Signale werden jeweils als Sensorsignal $f_1$ - $f_k$ in Form einer diskretisierten Wahrscheinlichkeitsdichtefunktion der betreffenden physikalischen Messgröße, hier z.B. die Zeitspanne bis zur Kollision, über ein definiertes Intervall [0, MAX] bereitgestellt. Die verschiedenen Sensorsignale werden zu einem einzigen, ebenfalls die Form einer Wahrscheinlichkeitsdichtefunktion der betreffenden Messgröße aufweisenden Endsignal fz kombiniert. Mittels eines lernenden Klassifizierers 12 wird anhand des kombinierten Endsignals fz dann eine endgültige Bewertung der aktuellen Fahrsituation vorgenommen.

Gemäß Fig. 1 können die von den Sensoreinheiten $10_1$ - $10_k$ gelieferten Signale beispielsweise einem Signalsynchronisations- und -assoziationsmodul 14 zugeführt werden, das für die zeitliche Synchronisation der verschiedenen Sensoreinheiten $10_1$ - $10_k$ verantwortlich ist und Signale, die von derselben physikalischen Einheit stammen bzw. dasselbe Objekt betreffen, einander zugeordnet. Die jeweils in Form einer diskretisierten Wahrscheinlichkeitsdichtefunktion vorliegenden Sensorsignale $f_1$ - $f_k$ werden dann beispielsweise in einer Signalkombinationsstufe 16 zu einem einzigen, ebenfalls wieder die Form einer Wahrscheinlichkeitsdichtefunktion der betreffenden Messgröße, insbesondere der Zeitspanne bis zur Kollision, aufweisenden Endsignal fz kombiniert.

In der Signalkombinationsstufe 16 werden für jede physikalische Einheit, hier beispielsweise die Zeitspanne bis zur Kollision, die bereitgestellten Sensorsignale $f_1$ - $f_k$ zu einem Endsignal fz kombiniert. Da das Objekt, bei dem es sich beispielsweise um ein vorangehendes Fahrzeug handeln kann, mittels mehrerer Sensoreinheiten $10_1$ - $10_k$ über-

wacht wird, werden die die Überwachung dieses Objekts betreffenden Signale in dem Signalsynchronisations- und -zuordnungsmodul 14 einander zugeordnet, wobei sie dann in der Signalkombinationsstufe 16 zu dem einzigen Endsignal fz kombiniert werden.

Wie bereits erwähnt, kann die betreffende physikalische Messgröße beispielsweise die Zeitspanne umfassen, bei deren Ablauf eine Kollision des Fahrzeugs mit dem Objekt erwartet wird.

Dabei kann mittels wenigstens einer der Sensoreinheiten $10_1$ - $10_k$ beispielsweise sowohl der Abstand des Objektes vom Fahrzeug als auch die Objektgeschwindigkeit erfasst werden. Die Zeitspanne bis zur Kollision kann durch den Quotienten zwischen dem Abstand des Objektes vom Fahrzeug und der Objektgeschwindigkeit bestimmt werden. Zur Bildung der Wahrscheinlichkeitsdichtefunktion der Zeitspanne bis zur Kollision können bezüglich des Abstandes des Objektes vom Fahrzeug und der Objektgeschwindigkeit bestimmte statistische Eigenschaften angenommen werden.

Es ist jedoch auch möglich, dass mittels wenigstens einer der Sensoreinheiten $10_1$ - $10_k$ die Wahrscheinlichkeitsdichtefunktion der Zeitspanne bis zur Kollision direkt geschätzt wird.

Es ist beispielsweise auch denkbar, dass mittels wenigstens einer der Sensoreinheiten $10_1$ - $10_k$ nur Modellparameter wie insbesondere der Abstand des Objektes vom Fahrzeug und die Objektgeschwindigkeit und die Standardabweichungen für den Abstand des Objektes vom Fahrzeug und die Objektgeschwindigkeit geliefert werden. In diesem Fall können die Modellparameter insbesondere bei der Kombination der verschiedenen Sensorsignale $f_1$ - $f_k$ zum Endsignal fz zur Rekonstruktion der jeweiligen Wahrscheinlichkeitsdichtefunktion verwendet werden.

Bei der Kombination der verschiedenen Sensorsignale $f_1$ - $f_k$ zum Endsignal fz kann die dem Endsignal fz zugeordnete Zufallsvariable insbesondere durch das Maximum, das Minimum, den arithmetischen Mittelwert, den Massenmittelwert oder den Median der den Sensorsignalen $f_1$ - $f_k$ zugeordnete, die jeweiligen Objektbeobachtungen wie z.B. die Zeitspanne bis zur Kollision beschreibenden Zufallsvariable $X_1$ - $X_k$ gebildet werden.

Mit

$$f_1(X_1), f_2(X_2), ..., f_k(X_k)$$

seien dabei die Wahrscheinlichkeitsdichtefunktionen für die erste, die zweite und die k-te zugeordnete Sensoreinheit $10_1$ - $10_k$ bezeichnet. Bei der Funktion $f_i$ handelt es sich also um die Wahrscheinlichkeitsdichtefunktion des i-ten Sensorberichts, während $X_i$ die entsprechende Zufallsvariable darstellt, die die betreffende Sensorüberwachung beschreibt.

Definiert man die dem Endsignal fz zugeordnete Endzufallsvariable Z beispielsweise als das Maximum der den Sensorsignalen $f_1$ - $f_k$ zugeordneten, die jeweiligen Objektbeobachtungen beschreibenden Zufallsvariablen $X_1$ - $X_k$, so ergibt sich die folgende Beziehung:

$$Z = \max\{X_1, ..., X_k\}.$$

Dies resultiert in einem sehr defensiven Endklassifizierer, da die Zufallsvariable Z hohe Massen für kleine Zeitspannen bis zur Kollision nur dann besitzt, wenn dies auch für sämtliche Zufallsvariablen $X_1, ..., X_k$ zutrifft.

Für den Fall, dass Z das Maximum von $X_1, ..., X_k$ definiert, also die Beziehung $Z = \max\{X_1, ..., X_k\}$ gilt, ergibt sich nämlich der folgende Zusammenhang:

$$f(t) = P(Z < t) = P(X_1 < t \text{ und } X_2 < t \text{ und } ... \text{ und } X_k < t) = P(X_1 < t) \cdot P(X_2 < t) \cdot ... \cdot P(X_k < t) = F_1(t) \cdot F_2(t) \cdot ... \cdot F_k(t),$$

wobei F in diesem Zusammenhang die Verteilungsfunktion von X beschreibt.

Der dritte Umformungsschritt (Ausmultiplizieren der Terme) ist nur dann möglich, wenn die einzelnen Variablen unabhängig voneinander sind, was im vorliegenden Fall angesichts der angenommenen Unabhängigkeit der Sensoreinheiten zutrifft.

Die Verteilungsfunktion der Einzelsensoreinheiten $F_1, ..., F_k$ kann aus den gelieferten Dichtefunktionen durch Integration berechnet werden. Genauso kann nach der Datenkombination oder -fusion dann die Dichtefunktion von Z über die Differentiation von F(Z) berechnet werden. Insoweit sind die Begriffe "Dichtefunktion" und "Verteilungsfunktion" austauschbar, da sie dieselbe Menge an Information über die Zufallsvariablen beschreiben.

Fig. 2 zeigt die Wahrscheinlichkeitsdichtefunktionen von drei Sensorsignalen $f_1$, $f_2$, $f_3$ sowie eines kombinierten Endsignals fz, wobei die dem Endsignal fz zugeordnete Endzufallsvariable Z dem Maximum der den drei Sensorsignalen $f_1$, $f_2$, $f_3$ zugeordneten, die jeweiligen Objektbeobachtungen beschreibenden Zufallsvariablen $X_1$, $X_2$, $X_3$ entspricht.

Wäre nur die das Sensorsignal $f_1$ liefernde Sensoreinheit verfügbar gewesen, so hätte das sich anschließende Fahrerassistenzsystem aufgrund der hohen Masse für kleine Zeitspannen bis zur Kollision einen Kollisionsalarm ausgelöst. Beim in Fig. 2 wiedergegebenen Fall zeigt das kombinierte Ausgangssignal jedoch eine unkritische Situation an, da für geringe Zeitspannen bis zur Kollision praktisch keine Masse vorhanden ist.

Definiert man die Zufallsvariable Z als das Minimum sämtlicher Zufallsvariablen $X_1$ - $X_k$, so ergibt sich die folgend Beziehung:

$$Z = \min\{X_1, \ldots, X_k\}.$$

Das resultierende Signal ist in diesem Fall sehr empfindlich, da es Massen für kleine und damit kritische Zeitspannen bis zur Kollision hervorhebt und Massen für hohe und damit unkritische Zeitspannen bis zur Kollision unterdrückt.

Fig. 3 zeigt die Wahrscheinlichkeitsdichtefunktionen $f_1$, $f_2$, $f_3$ von drei Sensorsignalen sowie eines kombinierten Endsignals fz, wobei im vorliegenden Fall die dem Endsignal fz zugeordnete Zufallsvariable Z dem Minimum der den drei Sensorsignalen $f_1$, $f_2$, $f_3$ zugeordneten, die jeweiligen Objektbeobachtungen beschreibenden Zufallsvariablen $X_1$, $X_2$, $X_3$ entspricht.

Wie bereits ausgeführt, sind weitere Methoden bei der Kombination der verschiedenen Sensorsignale zum Endsignal möglich. Wird die dem Endsignal fz zugeordnete Zufallsvariable Z beispielsweise durch den arithmetischen Mittelwert, den Massenmittelwert oder den Median der den Sensorsignalen zugeordneten Zufallsvariablen $X_1$ - $X_k$ gebildet, so ergeben sich die folgenden Beziehungen:

Für den arithmetischen Mittelwert:

$$Z = \frac{1}{k}\sum_{i=1}^{k}X_i$$

Für den Massenmittelwert:

$$f(Z) = \frac{1}{k}\sum_{i=1}^{k}f_i(X_i)$$

Für den Median:

$$Z = \mathrm{median}\{X_1, \ldots, X_k\}.$$

Für jede Methode ergibt sich ein anderes Verhalten des sich anschließenden Klassifizierers und damit des sich anschließenden Fahrerassistenzsystems.

**Bezugszeichenliste**

$10_i$    Sensoreinheit
12    lernender Klassifizierer

14    Signalsynchronisations- und -zuordnungsmodul

16    Signalkombinationsstufe

$f_i$    Sensorsignal in Form einer diskretisierten Wahrscheinlichkeitsdichtefunktion
$F_i$    Verteilungsfunktion einer einzelnen Sensoreinheit
$X_i$    die die Objektbeobachtung einer jeweiligen Sensoreinheit $10_i$ beschreibende Zufallsvariable
$Z$    Endzufallsvariable

**Patentansprüche**

1.  Verfahren zur Erfassung und Bestätigung kritischer Fahrsituationen, bei dem ein insbesondere vor einem Fahrzeug befindliches Objekt mittels mehrerer unabhängiger, dem Fahrzeug zugeordneter Sensoreinheiten ($10_1$ - $10_k$) überwacht wird, die von den Sensoreinheiten ($10_1$ - $10_k$) gelieferten Signale jeweils als Sensorsignal ($f_1$ - $f_k$) in Form einer diskretisierten Wahrscheinlichkeitsdichtefunktion der betreffenden physikalischen Messgröße über ein definiertes Intervall [0, MAX] bereitgestellt werden, und die verschiedenen Sensorsignale ($f_1$ - $f_k$) zu einem einzigen, ebenfalls die Form einer Wahrscheinlichkeitsdichtefunktion der betreffenden Messgröße aufweisenden End-signal ($f_z$) kombiniert werden, und
    mittels eines lernenden Klassifizierers (12) anhand des kombinierten Endsignals ($f_z$) eine endgültige Bewertung der aktuellen Fahrsituation vorgenommen wird,
    **dadurch gekennzeichnet, dass** für unterschiedliche Geschwindigkeiten des mit den Sensoreinheiten ($10_1$ - $10_k$) versehenen Fahrzeuges mehrere Klassifizierer (12) trainiert werden und der jeweils verwendete klassifizierer auf der Basis der aktuellen Geschwindigkeit des Fahrzeugs ausgewählt wird.

2.  Verfahren nach Anspruch 1,
    **dadurch gekennzeichnet,**
    **dass** die betreffende physikalische Messgröße die Zeitspanne umfasst, bei deren Ablauf eine Kollision des Fahrzeuges mit dem Objekt erwartet wird.

3.  Verfahren nach Anspruch 2,
    **dadurchgekennzeichnet**,
    dass mittels wenigstens einer der Sensoreinheiten ($10_1$ - $10_k$) sowohl der Abstand des Objektes vom Fahrzeug als auch die Objektgeschwindigkeit erfasst wird.

4.  Verfahren nach Anspruch 3,
    **dadurchgekennzeichnet**,
    **dass** die Zeitspanne bis zur Kollision durch den Quotienten zwischen dem Abstand des Objektes vom Fahrzeug und der Objektgeschwindigkeit bestimmt wird.

5.  Verfahren nach Anspruch 4,
    **dadurch gekennzeichnet,**
    **dass** zur Bildung der Wahrscheinlichkeitsdichtefunktion der Zeitspanne bis zur Kollision bezüglich des Abstandes des Objektes vom Fahrzeug und der Objektgeschwindigkeit mehrere statistische Eigenschaften angenommen werden.

6.  Verfahren nach einem der vorhergehenden Ansprüche,
    **dadurch gekennzeichnet,**
    **dass** mittels wenigstens einer der Sensoreinheiten ($10_1$ - $10_k$) die Wahrscheinlichkeitsdichtefunktion der Zeitspanne bis zur Kollision ohne Berücksichtigung von statistischen Eigenschaften bezüglich des Abstandes des Objektes vom Fahrzeug und der Objektgeschwindigkeit geschätzt wird.

7.  Verfahren nach einem der vorhergehenden Ansprüche,
    **dadurch gekennzeichnet,**
    **dass** mittels wenigstens einer der Sensoreinheiten ($10_1$ - $10_k$) nur Modellparameter wie insbesondere der Abstand des Objektes vom Fahrzeug und die Objektgeschwindigkeit und die Standardabweichungen für den Abstand des Objektes vom Fahrzeug und die Objektgeschwindigkeit geliefert werden.

8.  Verfahren nach Anspruch 7,

**dadurch gekennzeichnet,**
**dass** die Modellparameter bei der Kombination der verschiedenen Sensorsignale ($f_1$ - $f_k$) zum Endsignal ($f_z$) zur Rekonstruktion der jeweiligen Wahrscheinlichkeitsdichtefunktion verwendet werden.

9. Verfahren nach einem der vorhergehenden Ansprüche,
**dadurch gekennzeichnet,**
**dass** bei der Kombination der verschiedenen Sensorsignale ($f_1$ - $f_k$) zum Endsignal ($f_z$) die dem Endsignal ($f_z$) zugeordnete Zufallsvariable (Z) durch das Maximum, das Minimum, den arithmetischen Mittelwert, den Massenmittelwert oder den Median der den Sensorsignalen ($f_1$ - $f_k$) zugeordneten, die jeweiligen Objektbeobachtungen beschreibenden Zufallsvariablen ($x_1$ - $x_k$) gebildet wird.

10. Verfahren nach einem der vorhergehenden Ansprüche,
**dadurch gekennzeichnet,**
**dass** als lernender Klassifizierer (12) ein künstliches Neuronales Netzwerk oder eine Support Vector Machine verwendet wird.

11. Computerprogramm mit Programmcodemitteln zur Durchführung des Verfahrens nach einem der vorhergehenden Ansprüche, wenn das Computerprogramm auf einem Computer oder einer entsprechenden Recheneinheit ausgeführt wird.

12. Computerprogrammprodukt mit Programmcodemitteln, die auf einem computerlesbaren Datenträger gespeichert sind, zur Durchführung des Verfahrens nach einem der vorhergehenden Ansprüche 1 bis 10, wenn das Computerprogramm auf einem Computer oder einer entsprechenden Recheneinheit ausgeführt wird.

13. Vorrichtung zur Erfassung und Bestätigung kritischer Fahrsituationen, bei der ein insbesondere vor einem Fahrzeug befindliches Objekt mittels mehrerer unabhängiger, dem Fahrzeug zugeordneter Sensoreinheiten ($10_1$ - $10_k$) überwacht wird, mit einer Datenverarbeitungseinrichtung, die zur Durchführung des Verfahrens nach einem der Ansprüche 1 bis 10 ausgeführt ist.

**Claims**

1. A method for detecting and confirming critical driving situations, wherein an object, located in particular in front of a vehicle, is monitored by a plurality of independent sensor units ($10_1$-$10_k$) associated with the vehicle, the signals supplied by the sensing units ($10_1$-$10_k$) are provided respectively as sensor signal ($f_1$-$f_k$) in form of a discretized probability density function of the relevant physical measured variable over a defined interval [0, MAX], and the various sensor signals ($f_1$-$f_k$) are combined into a single end signal ($f_z$) also having the form of a probability density function of the relevant measured variable, and
a final evaluation of the actual driving situation is performed by a learning classifier (12) based on the combined end signal ($f_z$),
**characterized in that**
a plurality of classifiers (12) is trained for different speeds of the vehicle provided with the sensor units ($10_1$-$10_k$) and the used classifier is selected based on the actual speed of the vehicle.

2. A method according to claim 1,
**characterized in that**
the relevant physical measured variable includes the period of time at whose expiration a collision of the vehicle with the object is expected.

3. A method according to claim 2,
**characterized in that**
by means of at least one of the sensor units ($10_1$ - $10_k$) both the distance of the object to the vehicle and the object speed is detected.

4. A method according to claim 3,
**characterized in that**
the period of time to collision is determined by the quotient between the distance of the object to the vehicle and the object speed.

5. A method according to claim 4,
**characterized in that**
a plurality of statistical features is assumed for generating the probability density function of the period of time to collision with respect to the distance of the object to the vehicle and the object speed.

6. A method according to any one of the preceding claims,
**characterized in that**
the probability density function of the period of time to collision is estimated by means of at least one of the sensor units ($10_1$ - $10_k$) without considering statistical features with respect to the distance of the object to the vehicle and the object speed.

7. A method according to any one of the preceding claims,
**characterized in that**
only model parameters such as in particular the distance of the object to the vehicle and the object velocity and the standard deviations for the distance of the object to the vehicle and the object speed are provided by means of at least one of the sensor units ($10_1$ - $10_k$).

8. A method according to claim 7,
**characterized in that**
the model parameters are used in combining the various sensor signals ($f_1$ - $f_k$) into the end signal ($f_z$) to reconstruct the respective probability density function.

9. A method according to any one of the preceding claims,
**characterized in that**
when combining the various sensor signals ($f_1$ - $f_k$) into the final signal ($f_z$), the random variable (Z) associated with the final signal ($f_z$) is formed by the maximum, the minimum, the arithmetic mean value, the mass mean value or the median of the random variables ($x_1$ - $x_k$) associated with the sensor signals ($f_1$ - $f_k$) and describing the respective object observations.

10. A method according to any one of the preceding claims,
**characterized in that**
an artificial neural network or a support vector machine is used as learning classifier (12).

11. Computer program having program code means for performing the method according to any one of the preceding claims when the computer program is executed on a computer or a corresponding computing unit.

12. Computer program product having program code means stored on a computer readable data medium for performing the method according to any one of the preceding claims 1 to 10 when the computer program is executed on a computer or a corresponding computing unit.

13. Apparatus for detecting and confirming critical driving situations, wherein an object, located in particular in front of a vehicle, is monitored by a plurality of independent sensor units ($10_1$-$10_k$) associated with the vehicle, having a data processing unit adapted to execute the method according to any one of the claims 1 to 10.

**Revendications**

1. Procédé pour détecter et confirmer des situations de conduite critiques, dans lequel un objet qui se trouve en particulier devant un véhicule est surveillé au moyen de plusieurs unités à capteur ($10_1$-$10_k$) indépendantes associées aux véhicules, les signaux fournis par les unités à capteur ($10_1$-$10_k$) sont préparés sous la forme d'une fonction de densité de probabilité discrète de la grandeur de mesure physique concernée sur un intervalle défini [O, MAX], et les différents signaux de capteurs ($f_1$ - $f_k$) sont combinés pour donner un unique signal final ($f_z$) qui présente également la forme d'une fonction de densité de probabilité de la grandeur de mesure concernée, et au moyen d'une unité de classification (12) capable d'apprentissage, on exécute une évaluation définitive de la situation de conduite actuelle au moyen du signal final ($f_z$) combiné,
**caractérisé en ce que**, pour différentes vitesses du véhicule doté des unités à capteur ($10_1$-$10_k$), on exerce plusieurs unités de classification, et l'unité de classification respectivement utilisée est sélectionnée sur la base de la vitesse actuelle du véhicule.

**2.** Procédé selon la revendication 1,
**caractérisé en ce que** la grandeur de mesure physique concernée inclut la durée temporelle après expiration de laquelle on s'attend à une collision du véhicule avec l'objet.

**3.** Procédé selon la revendication 2,
**caractérisé en ce qu'**au moyen de l'une au moins des unités à capteur ($10_1$ - $10_k$) on détecte aussi bien la distance de l'objet au véhicule que la vitesse de l'objet.

**4.** Procédé selon la revendication 3,
**caractérisé en ce que** la durée temporelle jusqu'à la collision est déterminée par le quotient de la distance de l'objet au véhicule sur la vitesse de l'objet.

**5.** Procédé selon la revendication 4,
**caractérisé en ce que**, pour former la fonction de densité de probabilité de la durée temporelle jusqu'à la collision, on suppose plusieurs propriétés statistiques pour ce qui concerne la distance de l'objet au véhicule et la vitesse de l'objet.

**6.** Procédé selon l'une des revendications précédentes,
**caractérisé en ce qu'**au moyen de l'une au moins des unités à capteur ($10_1$ - $10_k$), on estime la fonction de densité de probabilité de la durée temporelle jusqu'à la collision sans tenir compte de propriétés statistiques pour ce qui concerne la distance de l'objet au véhicule et la vitesse de l'objet.

**7.** Procédé selon l'une des revendications précédentes,
**caractérisé en ce qu'**au moyen de l'une au moins des unités à capteur ($10_1$ - $10_k$), on délivre uniquement des paramètres modélisés, comment particulier la distance de l'objet au véhicule et la vitesse de l'objet, et les écarts standards pour la distance de l'objet au véhicule et la vitesse de l'objet.

**8.** Procédé selon la revendication 7,
**caractérisé en ce que** les paramètres modélisés sont utilisés pour la combinaison des différents signaux de capteurs ($f_1$ - $f_k$) pour donner le signal final ($f_z$) pour la reconstruction de la fonction de densité de probabilité respective.

**9.** Procédé selon l'une des revendications précédentes,
**caractérisé en ce que** pour la combinaison des différents signaux de capteurs ($f_1$ - $f_k$) pour donner le signal final ($f_z$), on forme la variable aléatoire (Z) associée au signal final ($f_z$) au moyen du maximum, du minimum, de la valeur moyenne arithmétique, de la valeur moyenne barycentrique ou de la médiane des variables aléatoires ($x_1$ - $x_k$) associées aux signaux de capteurs ($f_1$ - $f_k$) qui décrivent les observations des objets respectifs.

**10.** Procédé selon l'une des revendications précédentes,
**caractérisé en ce que** l'on utilise à titre d'unité de classification capable d'apprentissage (12) un réseau neuronal artificiel ou une machine vectorielle dite "Support Vector Machine".

**11.** Programme d'ordinateur comprenant des moyens formant code de programme pour la mise en oeuvre du procédé selon l'une des revendications précédentes quand le programme d'ordinateur est exécuté sur un ordinateur ou sur une unité de calcul correspondante.

**12.** Produit de programme d'ordinateur comprenant des moyens formant code de programme qui sont mémorisés sur un support de données lisible à l'ordinateur, pour la mise en oeuvre du procédé selon l'une des revendications précédentes 1 à 10 quand le programme d'ordinateur est exécuté sur un ordinateur ou sur une unité de calcul correspondante.

**13.** Appareil pour la détection et la confirmation de situations de conduite critiques, dans lequel un objet qui se trouve en particulier devant un véhicule est surveillé au moyen de plusieurs unités à capteur ($10_1$ - $10_k$) indépendantes et associées au véhicule, comprenant un système de traitement de données qui est réalisé pour la mise en oeuvre du procédé selon l'une des revendications 1 à 10.

## Fig. 1

## Fig. 2

$$Z = \max\{X_1, \ldots, X_k\}$$

Dichte

Zeitspanne bis zur Kollision

## Fig. 3

$$Z = \min\{X_1, \ldots, X_k\}$$

Dichte

Zeitspanne bis zur Kollision

## IN DER BESCHREIBUNG AUFGEFÜHRTE DOKUMENTE

**In der Beschreibung aufgeführte Patentdokumente**

- US 2006031015 A1

- US 20030078754 A1

**In der Beschreibung aufgeführte Nicht-Patentliteratur**

- **R. S. DOYLE ; C. J. HARRIS.** Multi-Sensor Data Fusion for Helicopter Guidance Using Neuro-Fuzzy Estimation Algorithms. *Systems, Man and Cybernetics, 1995, Intelligent Systems for the 21st Century, IEEE International Conference,* 22. Oktober 1995, vol. 2, 1392-1397